# EUROPEAN PATENT APPLICATION

(11) **EP 2 602 976 A1**
(43) Date of publication of application: **12.06.2013**
(21) Application number: 12194128.0
(22) Date of filing: 23.11.2012
(51) Int. Cl.: H04M 1/247

(54) **System facilitating meeting device interactions and methods thereof**

(30) Priority: 09.12.2011 US 201113374073
(71) Applicant: Mitel Networks Corporation, Ottawa, ON K2K 2W7 (CA)
(72) Inventor: Hillier, Peter, Ottawa, Ontario K2T 0E3 (CA); Arruda, Patrice, Ottawa, Ontario K2J 4L7 (CA)
(74) Representative: McDougall, James

(57) **Abstract**

The present disclosure relates to unified communications, and more particularly, to a system facilitating meeting device interactions and methods thereof. In an illustrative embodiment, the system can include a calendar booking tool and private branch exchange (PBX) to provide meeting information and telephony capabilities to an open device. Basic meeting information can be provided through the PBX to the device. This information can include a time, date, host and guests of the meeting. The PBX can reuse existing functionality and features for the meeting and provide them to the open device. These features can include, but are not limited to, displaying updates, populating keys and dynamically creating groups. The system can offer intuitive meeting functions on telephony devices having a display with self-labelling keys. Touch screen devices including soft phones can provide these features. The concepts can be extended to touch screen application capable phones.

## Description

This disclosure generally relates to communications, and more particularly, to displaying updates for meetings through intuitive features on telephony devices.

Telephony devices within meeting rooms are often open for creating conferences or direct dialling meeting participants. The conference room booking reservation model and the phone system to which the device can be attached are typically separate entities. Generally, the phone has no knowledge of who booked the room or who will be using the phone. Confusion can arise over who actually has the room booked, which can be resolved if a party has access to the reservation system while present in the room.

In some instances, individuals can forget that they are invited to a meeting. The individuals can also be remote and not attend through a fixed room, but rather call from their desk or mobile devices. This can provide them an isolated perspective of the meeting with unknown attendees. The invitees to a meeting can be considered a temporary group. However, there are generally no features through the phone system to address this group as a whole, for example, a group page, due to its temporary and dynamic nature.

A hot desk model can be employed where a user can log into the open meeting device before use. Logging into a device does not denote ownership of the room, but rather it can simply be used to apply a policy to the device, for example, dialling restrictions and billing. A room booking application, dedicated software and computing device can also be used separately with the meeting room phone to verify room bookings, send reminders and confirm attendance. Group associations can be statically configured and individuals belonging to a group can update their presence to opt in or out of group notifications. These systems have their drawbacks.

A need therefore exists for a system facilitating meeting device interactions and methods thereof that overcome those issues described above. These, as well as other related advantages, will be described in the present disclosure.

A first aspect of the invention provides a method for device configuration comprising: receiving telephony capabilities from a phone system based on a meeting established within a calendar application.

A second aspect of the invention provides a system comprising: a phone exchange having access to a calendar booking tool that provides at least one feature to an open device when a meeting within said calendar booking tool is scheduled to begin.

A third aspect of the invention provides a device comprising:
at least one processor; and
a memory operatively coupled to said processor, said memory storing program instructions that when executed by said processor, causes said processor to:
   receive features from a phone exchange dependent on a meeting established within a calendar application;
   display features for said meeting.

The novel features believed to be characteristic of the disclosure are set forth in the appended claims. In the descriptions that follow, like parts are marked throughout the specification and drawings with the same numerals, respectively. The drawing FIGURES are not necessarily drawn to scale and certain FIGURES can be shown in exaggerated or generalized form in the interest of clarity and conciseness. The disclosure itself, however, as well as a preferred mode of use, further objectives and advantages thereof, will be best understood by reference to the following detailed description of illustrative embodiments when read in conjunction with the accompanying drawings, wherein:
FIGURE 1 provides an illustrative system facilitating meeting device interactions in accordance with one or more aspects of the present disclosure;
FIGURES 2A and 2B provide an illustrative flow chart having exemplary processes for device configuration in accordance with one or more aspects of the present disclosure; and
FIGURE 3 provides an illustrative system pre-populating phones at multiple locations in accordance with one or more aspects of the present disclosure.

The description set forth below in connection with the appended drawings is intended as a description of presently preferred embodiments of the disclosure and is not intended to represent the only forms in which the present disclosure can be constructed and/or utilized. The description sets forth the functions and the sequence of steps for constructing and operating the disclosure in connection with the illustrated embodiments. It is to be understood, however, that the same or equivalent functions and sequences can be accomplished by different embodiments that are also intended to be encompassed within the scope of this disclosure.

The present disclosure relates to unified communications, and more particularly, to a system facilitating meeting device interactions and methods thereof. The system can include a calendar booking tool and private branch exchange (PBX) to provide meeting information and telephony capabilities to an open device. Basic meeting information can be provided through the PBX to the device. This information can include a time, date, host and guests of the meeting. The PBX can reuse existing functionality and features for the meeting and provide them to an open device. These features can include, but are not limited to, displaying updates, populating keys and dynamically creating groups. The system can offer intuitive meeting functions on telephony devices having a display with self-labelling keys. Touch screen devices including soft phones can provide these features. The concepts can be extended to touch screen application capable phones.

Numerous advantages can be offered by the embodiments described above. Open devices can take on characteristics and capabilities of the host as though they were operating in their own office or home. Pre-existing features already established within the PBX can also be used. Furthermore, notifying invitees to a meeting can be performed easily through paging techniques. The system can be used in a number of settings including hotels, businesses and homes. Many additional advantages of the present disclosure will become apparent to those skilled in the relevant art as provided for in the following description.

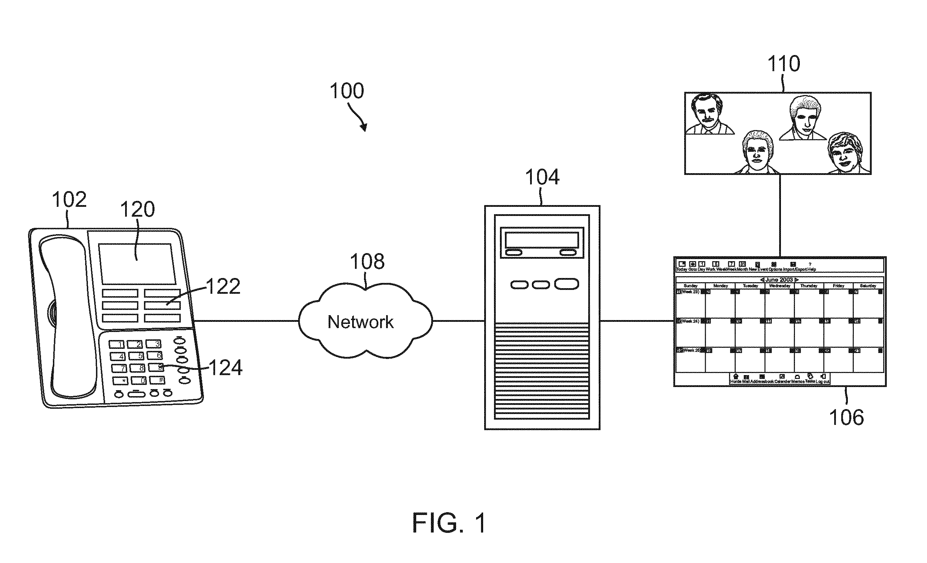

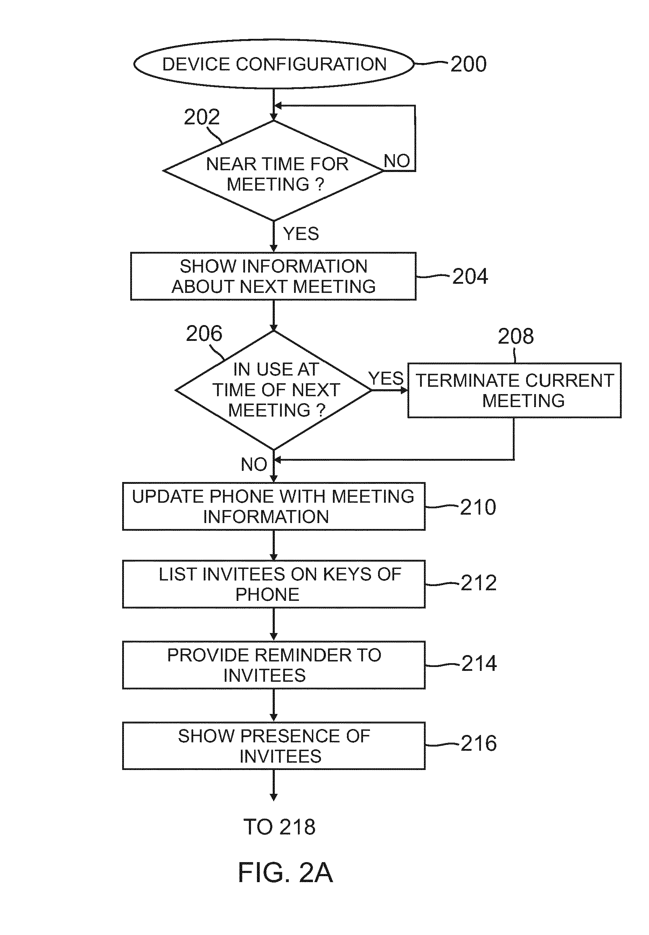

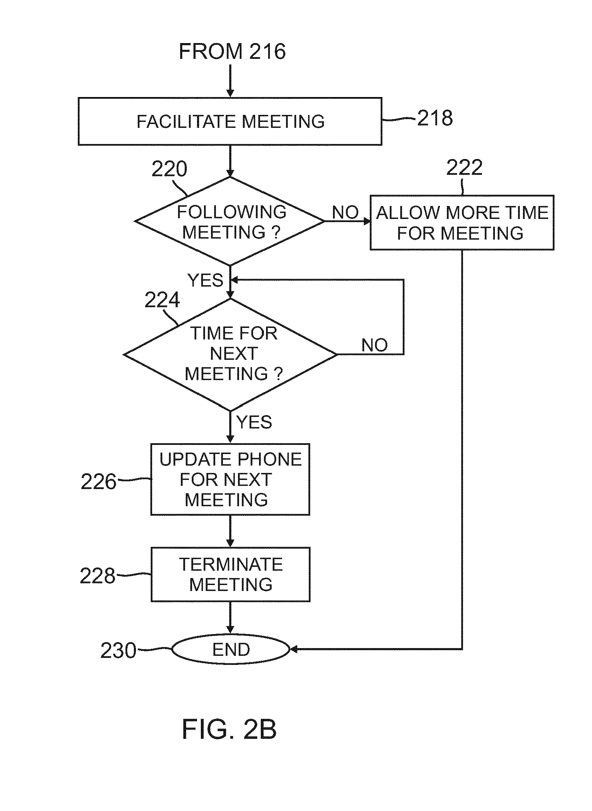

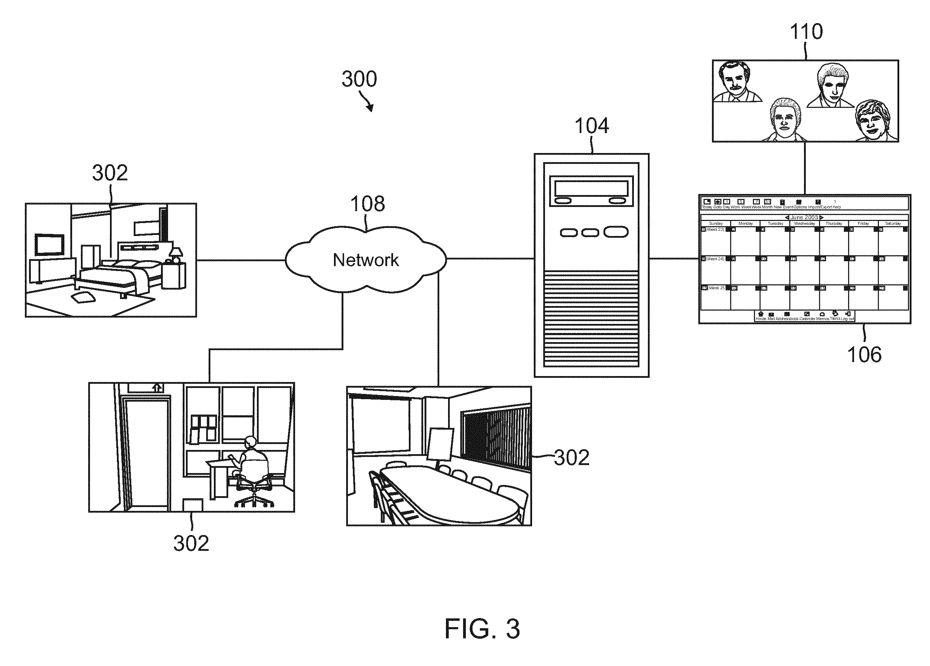

An exemplary system facilitating meeting device interactions will be described in FIGURE 1. FIGURES 2A and 2B provide exemplary procedures for device configuration. FIGURE 3 discloses an illustration for using the system through multiple locations. In this disclosure, the device can be a communication device that can be mobile or not. The device can be a tablet, mobile phone, smartphone, personal digital assistant, handheld computer, standalone computer, conference device or the like. The device can be an open device allowing multiple users access to it. The PBX can be referred to as a phone exchange, phone system or other communication device. Furthermore, the calendar booking tool can also be referred to as a calendar application.

Referring to FIGURE 1, an illustrative system 100 facilitating meeting device interactions in accordance with one or more aspects of the present disclosure is shown. The system 100 can include a phone 102, PBX 104 and calendar application 106. The phone 102 can be connected to the PBX 104 through a network 108. Groups 110 can be formed through the calendar application 106. Those skilled in the relevant art will appreciate that fewer or more components within the system 100 can be used. The system 100 focuses on reusing traditional telephony display phones 102 with programmable keys to drive display updates pertaining to meetings, specifically the host and invitees, from the PBX 104. The calendar application 106 can be a meeting book tool used to track user schedules and room availability such that a meeting can be created at the appropriate time when invitees and rooms are available.

Communications between the components of the system 100 can take place wirelessly or through a wireline connection. A number of protocols can be used to receive and provide communications through the system 100. Session control protocols to control the set-up and tear-down of communications can be implemented. Over these protocols, communications can be established. Basic functionality and packet structure can be defined through the protocol. Numerous types of protocols exist, which are known to those skilled in the relevant art.

The phone 102 within the system 100 can have a processor for implementing logic and memory storing program instructions. The memory can include one or more device managers for interacting with one or more I/O devices. The device managers can be software installed on the phone 102. A device manager can correspond to each I/O device. In addition to the device manager, one or more application programs can be loaded into memory and run on or in association with an operating system on the phone 102. Numerous types of application programs usable on the phone 102 will be apparent to those of ordinary skill in the relevant art.

A client application within the memory can allow the user to configure information on the phone 102. The client application can facilitate meeting device interactions between the phone 102, PBX 104 and other attendees. The client application on the phone 102 can be specifically programmed for interactions with the calendar application 106 through the PBX 104. The client application can be installed on the phone 102 through a network connection or via a direct link. Alternatively, the client application can be preinstalled and can be part of the operating system. In one embedment, the phone 102 can be a stimulus device with control and intelligence residing in the PBX 104. For example, the phone 102 can simply perform what it is told to do. Data can be driven from the PBX 104 to label the keys, set the display 120, etc.

As shown in FIGURE 1, the phone 102 can include a display 120 and keypad 124. The display 120 of the phone 102 can be a liquid crystal display (LCD), or any other type of display commonly used in phones 102. The display 120 can be touch-sensitive, and can act as an input device. The display 120 can show different information relevant to the user and the meeting. For example, the display 120 of the phone 102 can provide information about a current meeting or an available room to extend the current meeting. Meeting participants or invitees can also be shown on the display 120. The keypad 124 can be a push button numeric dialling pad (such as on a typical telephone), a multi-key keyboard (such as a conventional keyboard) or any other device for inputting textual data. In some phones 102, the keypad 124 can be shown on the display 120 allowing the touch-sensitive display 120 to act as the keypad 124.

As shown in FIGURE 1, the phone 102 can have a number of programmable keys 122. The programmable keys 122 can interact with the software on the phone 102 located within the memory. The programmable keys on the phone 102 can be updated with attendee's names, numbers, presence information and other data related to the conference or its participants. Alternatively, on a collaboration phone 102 with touch screen, soft-keys can be created and labelled with the participants' names and other information for ease of dialling and presence.

The phone 102 can be connected to the PBX 104 through a network 108. Many types of networks 108 can be integrated into the system 100. The network 108 shown within the system 100 can include, but is not limited to, a local area network (LAN), wide area network (WAN), personal area network (PAN), campus area network (CAN), metropolitan area network (MAN), global area network (GAN) or combination thereof. Such networking environments are commonplace in office networks, enterprise-wide computer networks, intranets and the Internet, which are all types of networks.

The PBX 104 can be any form of computing technology that can run PBX software. The exchange can include an operating system and software instructions, ROM, RAM, at least one processor, network interface and data storage. The exchange can process communications from the phone 102 or any other component within the system 100. The exchange can typically handle high volumes of transactions and large amount of queries for communication and data processing. RAM and ROM are used to support the program codes that are operated by the processor. The memory can be in a form of a hard disk, CD ROM, or equivalent storage medium. The processor can support authentications such as communications from external data servers, as well as allowing for anonymous transactions and general data encryption. The PBX 104 can provide parallel processing or multi-processing.

The PBX 104 can include a collection of one or more application protocol interfaces (APIs) for facilitating communications between the phone 102 and itself. The APIs can be invoked by the client application on the phone 102 and provided by the PBX 104. The APIs can be used to receive meeting information and telephony capabilities from the PBX 104. In this manner, the phone 102 can take advantage of services or functionalities of the one or more remote I/O devices on the PBX 104.

Continuing with FIGURE 1, a calendar application 106 can be associated with the PBX 104. The PBX 104 can store the calendar application 106 internally or the application 106 can be stored externally. The calendar application 106 can be deployed as a web application, for example on a web server, where it can communicate with the PBX 104, directly with the phone 102 or both. The calendar application 106 can be provided on a remote desktop, laptop or personal computer. The calendar application 106 can be placed in a cloud where it can be readily accessed by the PBX 104. Through the calendar application 106, meetings can be organized. Hosts and invitees can be established for a meeting. The meetings can be saved by the host. When the time for a meeting approaches, the PBX 104 can relay the information to the phone 102 and update it appropriately.

The system 100 can allow dynamic creation of groups 110 through the formation of meetings within the calendar application 106. A host can invite participants to prepare dynamic groups 110. The PBX 104 can create a temporary group 110 based on meeting attendees. The dynamic group 110 can associate typically disparate individuals for purposes of allowing a page to people who are to attend a meeting. For example, a meeting room phone 102 can be populated with a "Page Attendees" programmable key 122. When the key 122 is selected, it can page the attendees who are to be in the meeting assigned to the room to which the phone 102 belongs. Group 110 that can be paged differ from meeting to meeting based on which meeting is taking place in a room. Groups 110 can be referred to as dynamic as participants vary in each meeting. PBX features can be programmed on the fly using data from the calendar application 106 through dynamically generated groups 110.

In operation, the system 100 can reuse standard telephony capabilities of the PBX 104. The PBX 104 can provide other telephony capabilities involving the self-labelling keys 122, display updates, speed dials, and group pages. Many advanced features are possible by adding a client application on the phone 102 capable of integrating more fully with the calendar application 106. These features can include sending meeting reminders. Any form of communication can be used to remind participants of the meeting such as texting, paging and recorded voices. As shown in FIGURE 1, the PBX 104 can access the calendar application 106. Information including room bookings, host information, and invitee information can be retrieved by the PBX 104. Much of this can be available through existing means of calendar export, syncing or API interfaces. In some embodiments, the PBX 104 can push the information to the telephony devices 102.

Turning to FIGURES 2A and 2B, an illustrative flow chart having exemplary processes for device configuration in accordance with one or more aspects of the present disclosure is shown. The processes for configuring the phone 102 can begin at block 200. A host can establish a meeting within the calendar application 106 through the phone 102 or a separate device. The host can determine which phone 102 to use for the meeting. Participants can be invited by the host to attend the meeting. The participants including the host can be placed within a dynamic group 110. The calendar application 106 can ensure that only one meeting can be setup for a phone 102 at a time. The meeting can be established through the phone 102 within the system 100 or in the alternative, another interface. For example, the host can establish the meeting within their calendar application 106 operating on their desktop computer and later on, enter into a room or office where the phone 102 is located. This can allow the host to create a meeting while in a room with the phone 102 at the time of the meeting or earlier through another method.

At decision block 202, the PBX 104 can determine whether a time for the meeting established by the host is near. When the meeting time is not within a predetermined threshold, for example ten minutes, the PBX 104 can continue to wait until the time for the meeting approaches. Shortly before the meeting is set to start, at block 204, the PBX 104 can show information about the next meeting on the display 120 of the phone 102. For example, the display 120 can show the time, host name and invitees of the next meeting. Each meeting can be associated with a group 110 when organized within the calendar application 106. A meeting name can be established for the meeting and the name can be displayed such as "Monthly Member Meeting". The phone 102 may be in use before the next meeting occurs. When the phone 102 is in use, the phone 102 can provide a call waiting tone and flash/cycle the display 120 of the phone 102 to display the next meeting name and time as a notification to the current users that another meeting is near.

At decision block 206, the PBX 104 can determine whether the phone 102 is in use at the time of the next meeting. When there is another meeting at the time of the next scheduled meeting, the PBX 104 can terminate the current meeting at block 208. If the phone 102 is in use, the next meeting can be triggered by graceful call termination or forcefully by the PBX 104. Depending on configuration, a number of different implementations can be used to remove the current meeting and begin with the next.

The PBX 104 can find another location for the current meeting or the next meeting so that the meeting can be setup in that location. The PBX 104 can inquire whether the participants of either meeting can move to another location. By default, participants of the next meeting can be asked first whether they can move. Options can be provided by the phone 102 that can communicate to the PBX 104 about the move. If either meeting is moved to another location, an on-hold message can be provided by the PBX 104 until the participants reach the new location for the meeting. The message can notify other attendees of the meeting that the moved participants require additional time to get to the next location.

When the meeting begins, the PBX 104 can update the phone 102 with the next meeting information at block 210. The display 120 can be updated with host information and the meeting name established earlier. Depending on configuration, the host can enter a personal identification number (PIN) into the phone 102 to begin using it. Existing methods, such as hot desking or PIN lockout, can be used to block outgoing phone access until the host provides their credentials. This can be used to control access, apply policy (long distance allowed) and billing (accounts). The phone 102 in the meeting room can be updated with the directory name of the individual who booked the room. The phone 102 can also begin to take on characteristics and capabilities of that user. The PBX 104 can take information on the host's device and transfer it to the phone 102 within the meeting room. Such information can be used to resolve room conflicts that can occur since the host name and meeting name are clearly identified on the phone 102. This can reflect the resource booking of the calendar application 106.

At block 212, invitees to the meeting can be listed on the programmable keys 122 of the phone 102. The programmable keys 122 on the phone 102 can be updated with names, numbers and other data related to the conference or its participants. On a collaboration appliance with a touch screen, soft-keys can be created and labelled with the participants names for ease of dialling and presence. The self labelling programmable keys 122 can be updated with the list of invitees and indicate meeting options. These options can include, but are not limited to, "accepted", "declined" and "no response".

Reminders to invitees can be provided at block 214. As described above, the PBX 104 can create a temporary group 110 based on meeting attendees. The phone 102 can be populated with a "Page Attendees" programmable key 122 based on the group 110. When the key 122 is pressed, it can page attendees who are supposed to be in the meeting assigned to the room to which the phone 102 belongs. The programmable key 122 can initiate a reminder to participants by sending a message to a meeting tool to issue the reminder to invitees. Consumer based conferencing applications can use this to populate soft-keys on telecom devices to represent users who are attending a conference.

At block 216, the presence of invitees can be displayed on the phone 102 beside the appropriate individuals' name on the programmable keys 122. Presence information, location based services and connected party information (for dialled in participants) can be used to filter reminders such that they are only sent to those who are not in attendance. When a meeting room is used, the attendee list can also be built from presence, which can be linked to location based services of a mobile device or badge, for example. This information can be used and exported to other devices that are connected into the meeting so that remote participants can know with whom they are speaking.

Participants who are not local or who do not intend to go to a specific meeting room, or if no meeting room is defined, can be notified over their desktop or mobile device that the meeting is about to being. Upon acceptance, their phone also takes on the display characteristics of the described meeting room phone 102, with their programmable keys updated to reflect attendees, status, etc. Host options and attendee options (other programmable keys) can differ.

At block 218, the PBX 104 can facilitate the meeting. Communications can be provided back and forth between the attendees of the meeting. Other programmable keys 122 on the phone 102 can be established to assist with the communications. A client based application residing on the meeting phone 102 can provide even further advanced features commonly used today which do not require PBX functionality, such as emailing reminders to attendees. The level of PBX 102 to calendar application 106 integration can drive even more features simply by placing a label on the key 122 and acting upon any related key press. The PBX 104 can also drive this interface to desk phones to produce remote meetings by providing participants with meeting information such as host, invitees and actual attendees.

At decision block 220, the PBX 104 can determine whether a following meeting has been scheduled within the calendar application 106. An option to "Display Next Meeting" can exist on the phone 102 so that current meeting attendees can be notified if their meeting can run longer or not. As an example, when the meeting is nearing its end and no one has the room booked for the next time slot, the phone 102 can beep and ask the user if they wish to extend the meeting into the next time slot. The user can accept and at block 222, the PBX 104 can use the API interface to the calendar application 106 to book the user into the room for more time. The processes can end at block 230 or until another meeting is scheduled.

When there is another meeting scheduled within the calendar application 106, at decision block 224, the PBX 104 can determine whether the time for that meeting is near. If not, the current meeting can continue and the PBX 104 can wait until that time arrives. When the meeting time has arrived, the phone 102 can be updated by the PBX 104 with information about the next meeting at block 226. At block 228, the current meeting can be terminated or moved to another location, as described above. Alternatively, participants of the next meeting can move to another location. The processes can end at block 230.

Referring now to FIGURE 3, an illustrative system 300 pre-populating phones at multiple locations 302 in accordance with one or more aspects of the present disclosure is shown. The system 300 can include a PBX 104 and calendar application 106. Phones 102 can be connected to the PBX 104 through a network 108 at multiple locations 302, for example, at a hospital, campus or office. Dynamic groups 110 can be established through information detailed in the calendar application 106.

The phones 102 within the locations 302 can be used by an individual currently "owning" the room. Provided information is known about the user who can be within the room through the calendar application 106 and the PBX 104. The phones 102 at each location 302 can be personalized at the time of, or briefly in advance of, the reservation. The phones 102 can be personalized to denote their purposes such as a gathering of individuals. For example, if several individuals were attending a conference at a specific hotel, the room phones 102 at that hotel where the participants are residing can be pre-populated with keys 122 denoting fellow employees attending the conference so that they can be dialled easily with the phone interface or page them.

The data structures and code, in which the present disclosure can be implemented, can typically be stored on a non-transitory computer-readable storage medium. The storage can be any device or medium that can store code and/or data for use by a computer system. The non-transitory computer-readable storage medium includes, but is not limited to, volatile memory, non-volatile memory, magnetic and optical storage devices such as disk drives, magnetic tape, CDs (compact discs), DVDs (digital versatile discs or digital video discs), or other media capable of storing code and/or data now known or later developed.

The methods and processes described in the disclosure can be embodied as code and/or data, which can be stored in a non-transitory computer-readable storage medium as described above. When a computer system reads and executes the code and/or data stored on the non-transitory computer-readable storage medium, the computer system performs the methods and processes embodied as data structures and code and stored within the non-transitory computer-readable storage medium. Furthermore, the methods and processes described can be included in hardware modules. For example, the hardware modules can include, but are not limited to, application-specific integrated circuit (ASIC) chips, field-programmable gate arrays (FPGAs), and other programmable-logic devices now known or later developed. When the hardware modules are activated, the hardware modules perform the methods and processes included within the hardware modules.

The technology described herein can be implemented as logical operations and/or modules. The logical operations can be implemented as a sequence of processor-implemented executed steps and as interconnected machine or circuit modules. Likewise, the descriptions of various component modules can be provided in terms of operations executed or effected by the modules. The resulting implementation is a matter of choice, dependent on the performance requirements of the underlying system implementing the described technology. Accordingly, the logical operations making up the embodiments of the technology described herein are referred to variously as operations, steps, objects, or modules. It should be understood that logical operations can be performed in any order, unless explicitly claimed otherwise or a specific order is inherently necessitated by the claim language.

Various embodiments of the present disclosure can be programmed using an object-oriented programming language, such as SmallTalk, Java, C++, Ada or C#. Other object-oriented programming languages can also be used. Alternatively, functional, scripting, and/or logical programming languages can be used. Various aspects of this disclosure can be implemented in a non-programmed environment, for example, documents created in HTML, XML, or other format that, when viewed in a window of a browser program, render aspects of a GUI or perform other functions. Various aspects of the disclosure can be implemented as programmed or non-programmed elements, or any combination thereof.

The foregoing description is provided to enable any person skilled in the relevant art to practice the various embodiments described herein. Various modifications to these embodiments will be readily apparent to those skilled in the relevant art, and generic principles defined herein can be applied to other embodiments. Thus, the claims are not intended to be limited to the embodiments shown and described herein, but are to be accorded the full scope consistent with the language of the claims, wherein reference to an element in the singular is not intended to mean "one and only one" unless specifically stated, but rather "one or more." All structural and functional equivalents to the elements of the various embodiments described throughout this disclosure that are known or later come to be known to those of ordinary skill in the relevant art are expressly incorporated herein by reference and intended to be encompassed by the claims. Moreover, nothing disclosed herein is intended to be dedicated to the public regardless of whether such disclosure is explicitly recited in the claims.

## Claims

1. A method for device configuration comprising:
a telephony device receiving telephony capabilities from a phone system, wherein the telephony capabilities are based on a meeting established within a calendar application associated with the phone system; and
configuring the telephony device such that the telephony capabilities can be accessed through the telephony device.

2. The method of claim 1, comprising the telephony device providing a login to said phone system to access said telephony capabilities.

3. The method of claim 1 or claim 2, comprising the telephony device receiving room booking, host and invitee information of said meeting.

4. The method of any preceding claim, comprising populating programmable keys on the telephony device with said telephony capabilities.

5. The method of claim 4, further comprising populating one or more of said programmable keys with a page feature, whereby said page feature, when executed, notifies invitees of said meeting.

6. The method of claim 4 or claim 5, wherein populating said programmable keys comprises displaying speed dials on one or more of said programmable keys and/or wherein populating said programmable keys comprises listing at least one invitee on one or more of said programmable keys and optionally comprising updating said programmable keys for said at least one invitee with at least one of accepted, declined and no response.

7. A system comprising a phone exchange configured to:
access a calendar booking tool; and
when a meeting established within said calendar booking tool is scheduled to begin, provide at least one telephony feature based on the meeting to an open device.

8. The system of claim 7, wherein the phone exchange is configured to establish a dynamically created group from invitees of said meeting.

9. The system of claim 7 or claim 8, wherein the system further comprises an open device configured to populate self-labelling keys with said at least one telephony feature provided by said phone exchange and optionally wherein said self-labelling keys are populated with at least one of a name, number, presence information and conference data.

10. The system of any of claims 7 to 9, wherein said phone exchange notifies participants of a prior meeting about said meeting.

11. A device comprising at least one processor arranged to:
receive telephony features from a phone exchange, wherein the telephony features are based on a meeting established within a calendar application associated with the phone exchange; and
configure the device such that the telephony features can be accessed through the device.

12. The device of claim 11, wherein said processor is configured to cause presence information about invitees of said meeting to be displayed and optionally wherein said processor is configured to create a list of those invitees present.

13. The device of claim 11 or claim 12, wherein said processor is configured to cause an indication of a next meeting to be displayed.

14. The device of any of claims 11 to 13, wherein said processor is configured to extend said meeting into a next time slot when available.

15. The device of any of claims 11 to 14, wherein said processor is configured to locate an alternate room for said meeting.
